# DEMANDE DE BREVET EUROPEEN

(11) **EP 1 271 891 A1**
(43) Date de publication de la demande: **02.01.2003**
(21) Numéro de dépôt: 02291349.5
(22) Date de dépôt: 03.06.2002
(51) Int. Cl.: H04L 29/06

(54) **Procédé de transmission d'un message actif dans un circuit virtuel**

(30) Priorité: 18.06.2001 FR 0107958
(71) Demandeur: ALCATEL, 75008 Paris (FR)
(72) Inventeur: Galand, Damien, 92370 Chaville (FR); Marce, Olivier, 91300 Massy (FR)
(74) Mandataire: Chaffraix, Sylvain

(57) **Abrégé**

Procédé de transmission d'un message au travers d'un réseau de données, comportant une première étape consistant à établir un circuit virtuel entre un premier noeud et un second noeud, les noeuds appartenant au circuit virtuel transmettant le message en fonction d'un entête, caractérisé en ce qu'il comporte de surcroît une étape d'insertion d'informations dans cet entête, et en ce que chaque noeud du circuit virtuel détermine si ledit message est un message actif en fonction de ces informations.

## Description

La présente invention est relative aux réseaux de télécommunication dont les noeuds sont capables de traiter de façon spécifique, les messages d'information qu'ils reçoivent.

L'invention s'applique particulièrement aux réseaux actifs. Ce concept de réseau actif a été introduit par les travaux du DARPA en 1994 et a fait l'objet de plusieurs conférences internationales, par exemple IWAN 99 (*International Workshop on Active Networks*) ou IWAN 2000.

Un réseau actif est un réseau dans lequel les noeuds, ou certains d'entre eux, sont capables de traiter d'une façon spécifique, certains messages véhiculés par le réseau. Autrement dit, cela signifie que ces noeuds doivent être capables de dérouler un algorithme autre que ceux qu'ils connaissaient lors de leur conception.

Au sein d'un réseau actif, tous les noeuds ne sont pas obligatoirement pourvus de cette capacité de traitement : on distingue donc des noeuds actifs de noeuds non actifs (c'est-à-dire normaux).

De la même façon, tous les messages ne nécessitent pas forcément un traitement spécifique : on distingue donc les messages (ou paquets) actifs des messages non-actifs (ou normaux).

Cette technologie pose un problème lorsqu'on veut l'utiliser conjointement au protocole MPLS (*Multi-Protocol Label Switching*), tel que décrit dans le RFC (*Request for Comments*) 3031 de l'IETF (*Internet Engineering Task Force*).

Le protocole MPLS consiste à donner la possibilité de créer des circuits virtuels au sein d'un réseau de données fonctionnant normalement en commutation de paquets, tels les réseaux utilisant les protocoles de la pile TCP/IP (Transmission Control Protocol / Internet Protocol) dont Internet est un exemple. Dans le cadre d'un réseau internet, les noeuds sont habituellement appelés routeurs et les messages, paquets.

Le principe du protocole MPLS repose sur l'adjonction aux paquets d'un entête contenant une étiquette (*label* en anglais), ou une pile d'étiquettes, permettant de définir un circuit. A la réception d'un tel paquet, les routeurs peuvent, à la simple lecture de ces étiquettes, déterminer au moyen d'une table de correspondance, le routeur vers lequel il doit être transmis.

Cette table de correspondance est négociée au préalable par les routeurs devant faire partie de ce circuit virtuel.

Ce procédé permet de réserver un circuit virtuel au sein duquel les paquets seront rapidement transmis, sur la simple analyse d'une ou de plusieurs étiquettes et d'une table de correspondance, et non plus en mettant en oeuvre les algorithmes classiques de routage. Le temps de transmission d'un paquet par un routeur est donc considérablement plus court, et il en est de même pour le temps de transmission de bout en bout.

Ce procédé permet de surcroît d'avoir l'assurance que tous les paquets prendront le même chemin.

Toutefois, dans le cadre d'un réseau actif, l'établissement d'un circuit virtuel pose un problème technique important. En effet, dans la mesure où la transmission se base uniquement sur la lecture de l'entête adjointe à cet effet, le contenu du paquet n'est pas analysé. Il ne peut alors pas être déterminé si ce contenu est celui d'un paquet actif ou non.

L'invention a pour but de pallier ce problème en proposant un procédé permettant de concilier les contraintes de la transmission dans un circuit virtuel et celles des réseaux actifs.

Pour ce faire, l'invention a pour objet un procédé de transmission d'un message au travers d'un réseau de données, comportant une première étape consistant à établir un circuit virtuel entre un premier noeud et un second noeud, les noeuds appartenant au circuit virtuel transmettant le message en fonction d'un entête. Ce procédé se caractérise en ce qu'il comporte de surcroît une étape d'insertion d'informations dans l'entête, et en ce que chaque noeud du circuit virtuel détermine si le message est un message actif en fonction de ces informations.

Il devient alors possible pour chaque noeud faisant partie d'un circuit virtuel, par exemple MPLS, de déterminer qu'un message reçu est un message actif et, auquel cas, de prendre les mesures adéquates (par exemple, déclencher le code contenu dans ce message).

Selon une mise en oeuvre particulière de l'invention, lorsqu'un noeud du circuit virtuel reçoit un message actif, il duplique au préalable le message reçu, en transmet un exemplaire au noeud suivant et déclenche le traitement associé au message actif sur le deuxième exemplaire. Ce mécanisme de duplication peut par exemple être déclenché en fonction d'un identificateur spécifique contenu dans ces informations.

Selon une mise en oeuvre de l'invention, ces informations contiennent des données relatives à l'environnement d'exécution nécessaire pour le traitement du message actif.

Selon une mise en oeuvre particulière, le circuit virtuel est conforme au protocole MPLS (*Multi-protocol Label Switching*) défini dans le RFC 3031 de l'IETF.

Enfin, les informations peuvent, selon un premier mode de réalisation, être insérées sous la forme d'une étiquette dans la pile d'étiquette du message, ou, selon un deuxième mode de réalisation, être insérées dans le champ « Exp » d'une étiquette de la pile d'étiquettes du message. D'autres modes de réalisation sont, bien entendu, possibles.

L'invention a pour autre objet un routeur possédant des moyens pour mettre en oeuvre ces procédés.

L'invention et ses avantages apparaîtront de façon plus claire dans la description qui va suivre, en liaison avec les figures jointes.

La figure 1 illustre un message selon une mise en oeuvre de l'invention utilisant le protocole MPLS.

La figure 2 représente le contenu de l'entête d'un message selon cette même mise en oeuvre.

Typiquement, un message (ou paquet) d'un réseau de données est constitué d'une suite d'entêtes et d'un corps de message. Cette suite d'entêtes est représentative des différents couches du modèle de réseau. Les entêtes les plus proches du corps de message sont celles correspondant aux couches les plus hautes, tandis que les entêtes les plus éloignés du corps de message (et donc les plus proches du début du message) correspondent aux couches les plus basses.

Si l'on reprend le modèle OSI (Open Systems *Interconnection*) en 7 couches promus par l'ISO (*International Standards Organization*), cela signifie que les entêtes de niveaux « Lien de données » (*Dota Link*, en anglais) sont situés avant les entêtes de niveaux « Réseaux » (*Network*).

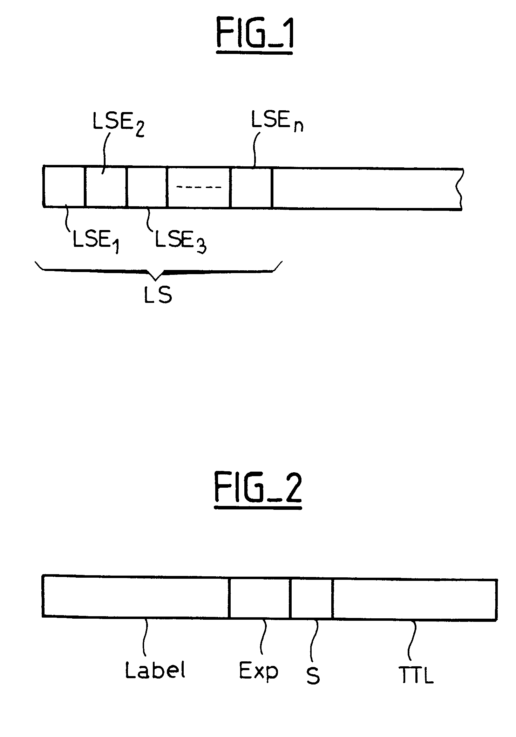

La figure 1 illustre un paquet conforme au protocole MPLS. Ce paquet contient une pile d'étiquette LS située en début de paquet, c'est-à-dire avant l'entête de niveau « réseau ».

Cette pile d'étiquette peut former un entête indépendant ou bien être comprise dans des champs adéquats d'un entête de niveau inférieur au niveau « réseau ». Autrement dit, cette pile d'étiquette LS doit se situer avant l'entête IP (*Internet Protocol*).

La pile d'étiquette LS est composée d'un ensemble, éventuellement réduit à un singleton, d'étiquettes LSE₁, LSE₂, LSE₃... LSEₙ.

La structure d'une étiquette (ou LSE pour Label Stock Entry, en anglais) est illustrée par la figure 2. Selon le RFC 3032 de l'IETF, une étiquette comporte 4 champs.

Le champ « Label » représente l'étiquette proprement dite, c'est-à-dire un identificateur permettant le routage du paquet.

Le champ « Exp » (pour *Experimental use*) est réservé à des fins expérimentales.

Le champ « S » (pour *bottom of Stack*) permet de repérer que l'étiquette en question est la dernière de la pile d'étiquette. Cela permet au routeur de détecter la limite entre la pile d'étiquette et le champ suivant, par exemple l'entête IP.

Enfin, le champ « TTL » (pour *Time To Live*) est un champ classique codant l'age de l'étiquette. Il permet de limiter la propagation d'un paquet à un nombre défini de sauts.

Selon une première mise en oeuvre de l'invention, on insère des informations dans le champ « Exp » d'une des étiquettes de la pile d'étiquette du paquet. Ces informations permettent, entre autres, de repérer que le paquet concerné est un paquet actif.

Selon une seconde mise en oeuvre, préférentielle, on réserve une étiquette complète pour stocker ces informations, par exemple la dernière de la pile. Une (ou plusieurs) valeur du champ « Label » peut alors être définie par l'IANA (*Internet Assigned Number Authority*) afin de signifier que l'étiquette en question contient de telles informations.

Ces informations doivent contenir au moins des données permettant de déterminer que le paquet est un paquet actif. Ces données peuvent prendre la forme d'un identificateur binaire.

Selon une mise en oeuvre de l'invention, ces informations peuvent aussi contenir un identificateur spécifique, permettant d'indiquer au noeud (ou routeur) recevant ce paquet qu'il doit le dupliquer avant de le transmettre au routeur suivant. Il peut alors déclencher le traitement associé à ce paquet, sans retarder la transmission. Cette façon de faire permet d'accélérer l'acheminement d'un paquet actif au sein d'un réseau.

Ce comportement peut être le comportement « par défaut» du routeur, toutefois il n'est pas toujours adapté (notamment, si l'on veut faire dépendre l'algorithme de routage du code actif associé au paquet). Il est donc préférable d'indiquer, pour chaque paquet, si ce mécanisme doit être mis en oeuvre ou pas.

Selon une mise en oeuvre de l'invention, ces informations peuvent aussi contenir des données relatives à l'environnement d'exécution nécessaire au traitement associé au paquet. Cette option est particulièrement intéressante dans le cas où le paquet actif contient du code actif (par opposition au cas où le paquet actif fait appel à un code non contenu dans ce paquet, mais soit dans le routeur, soit sur un serveur de codes actifs).

Il est en effet inutile que le routeur traite un paquet actif, s'il n'est pas en mesure d'exécuter le code associé.

L'environnement d'exécution peut comprend le système d'exploitation nécessaire à l'exécution du code (Unix, plate-forme CORBA etc.) mais aussi les librairies nécessaires etc.

Typiquement, l'insertion de ces informations est mise en oeuvre par le routeur situé en début de chemin virtuel. Selon la terminologie MPLS, un tel routeur est appelé un ALSR, pour *Active Label Switch Router*.

## Revendications

1. Procédé de transmission d'un message au travers d'un réseau de données, comportant une première étape consistant à établir un circuit virtuel entre un premier noeud et un second noeud, les noeuds appartenant audit circuit virtuel transmettant ledit message en fonction d'un entête, **caractérisé en ce qu'**il comporte de surcroît une étape d'insertion d'informations dans ledit entête, et **en ce que** chaque noeud dudit circuit virtuel détermine si ledit message est un message actif en fonction desdites informations.

2. Procédé selon la revendication précédente, dans lequel lorsqu'un noeud dudit circuit virtuel reçoit un message actif, il duplique au préalable le message reçu, en transmet un exemplaire au noeud suivant et déclenche le traitement associé au message actif sur le deuxième exemplaire.

3. Procédé selon la revendication précédente, dans lequel le mécanisme de duplication est déclenché en fonction d'un identificateur spécifique contenu dans lesdites informations.

4. Procédé selon l'une des revendications précédentes, dans lequel lesdites informations contiennent des données relatives à l'environnement d'exécution nécessaire pour le traitement du message actif.

5. Procédé selon l'une des revendications précédentes, dans lequel ledit circuit virtuel est établi conformément au protocole MPLS.

6. Procédé selon la revendication précédente, dans lequel lesdites informations sont insérées sous la forme d'une étiquette (LSE₁, LSE₂, LSE₃... LSEₙ) dans la pile d'étiquettes (LS) dudit message.

7. Procédé selon la revendication 5, dans lequel lesdites informations sont insérées dans le champ « Exp » d'une étiquette de la pile d'étiquettes dudit message.

8. Routeur possédant des moyens pour mettre en oeuvre le procédé selon l'une des revendications précédentes.
